# EUROPEAN PATENT APPLICATION

(11) **EP 4 742 452 A1**
(43) Date of publication of application: **13.05.2026**
(21) Application number: 24836011.7
(22) Date of filing: 01.07.2024
(51) Int. Cl.: H01Q 15/14, B32B 7/025

(54) **PROTECTIVE-LAYER-EQUIPPED RADIO WAVE SCATTERING SHEET**

(30) Priority: 05.07.2023 JP 2023110788
(71) Applicant: National Institute of Information and Communications Technology, Koganei-shi, Tokyo 184-8795 (JP)
(72) Inventor: MURAKAMI, Yasutaka, Chofu-shi, Tokyo 182-8585 (JP); HAMADA, Rira, Koganei-shi, Tokyo 184-8795 (JP); CHAKAROTHAI, Jerdvisanop, Koganei-shi, Tokyo 184-8795 (JP); FUJII, Katsumi, Koganei-shi, Tokyo 184-8795 (JP)
(74) Representative: Strehl & Partner mbB
(86) International application number: PCT/JP2024/023731
(87) International publication number: WO 2025/009498

(57) **Abstract**

Provided is a protective-layer-equipped radio-wave scattering sheet that is provided with a protective layer that does not inhibit radio-wave scattering characteristics as much as possible while improving the appearance and durability of the radio-wave scattering sheet.

[Solution]

In a protective-layer-equipped radio-wave scattering sheet 11, in which an radio-wave scattering surface 1d of an radio-wave scattering sheet 1 is covered with a dielectric layer 2 to protect a front metal processed layer 1c, the appearance and durability of the radio-wave scattering sheet 1 is improved by the dielectric layer 2. In addition, by making the dielectric layer 2 covering the radio-wave scattering surface 1d have a thickness in the range of 0.25 mm to 3.0 mm, and by making the dielectric layer 2 have a relative permittivity in the range of 2.0 to 4.0, a decrease in the diffusion coefficient is limited to 10% or less.

## Description

### Technical Field

The present invention relates to a protective-layer-equipped radio-wave scattering sheet in which a metal pattern exposed as an radio-wave scattering surface of a metamaterial-structured radio-wave scattering sheet is covered to improve the appearance and the durability.

### Background Art

In recent years, the fifth-generation wireless communication (so-called 5G) service has been started, in which radio-waves in a frequency band of 28 GHz are used. In this frequency band, the propagation attenuation of the radio-waves is large and the straightness is high. Thus, if there is a shielding object between a transmission antenna and a reception antenna, the radio- waves from the transmission antenna do not reach the reception antenna, leading to a problem in that the communication quality is greatly deteriorated. To address this problem, metamaterial-structured radio-wave scattering sheets that scatter reflected waves of radio- waves at wide angles have been developed.

There is an radio-wave scattering sheet, serving as a metamaterial-structured radio-wave scattering sheet, that is designed to have a desired scattering pattern by processing a specific metal pattern on a dielectric substrate (for example, see NPL 1). In addition, a reflectarray has been developed in which the dimensions and shape of reflective elements are changed to vary the resonant frequency of each reflective element, whereby the reflection phase of radio-waves is controlled, and the incident direction and the reflection direction of radio-waves are controlled (for example, see PTL 1). Such radio-wave scattering sheet and reflectarray are used by being attached to a wall surface, a ceiling, or the like in a room. By scattering scattered waves on the surface (radio-wave scattering surface) at wide angles, it is possible to cause radio-waves to reach a region where radio- waves do not reach in a typical metal flat plate, and it is possible to improve the quality of wireless communication for multiple terminals or moving terminals.

### Citation List

### Non Patent Literature

NPL 1: Y. Murakami, J. Chakarothai and K. Fujii, "Design of electromagnetic scattering wall using genetic algorithm," IEICE Commun. Express, vol. 9, pp. 282 to 287, 2020.

### Patent Literature

PTL 1: International Publication No. 2022/186385

### Summary of Invention

### Technical Problem

However, in the conventional radio-wave scattering sheet and reflectarray, the metal pattern of the radio-wave scattering surface is exposed. Hence, there has been a concern that the characteristics may deteriorate due to rust or adhesion of dirt (so-called deterioration over time). In addition, when the radio-wave scattering sheet or the like is used indoors, the appearance is not necessarily good because the metal pattern of the radio-wave scattering surface is exposed, whereas when the radio-wave scattering sheet or the like is used outdoors, adverse effect on the surrounding landscape is a concern. Furthermore, regardless of whether indoors or outdoors, sunlight incident on an radio-wave scattering surface of an radio-wave scattering sheet or the like may be reflected and focused by the metal pattern, posing a risk of fire.

These problems caused by the metal pattern exposed on the radio-wave scattering surface may be solved by covering the radio-wave scattering surface of the radio-wave scattering sheet with a non-metal material so that the metal pattern is not exposed. However, covering the radio-wave scattering surface of the radio-wave scattering sheet with another material may lead to a risk that the radio-wave scattering characteristics, which are most important, may be deteriorated or significantly impaired. The important point is what material satisfying certain conditions is to be used to cover the radio-wave scattering surface of the radio-wave scattering sheet.

Accordingly, an object of the present invention is to provide a protective-layer-equipped radio-wave scattering sheet provided with a protective layer that does not impair the radio-wave scattering characteristics as much as possible while improving the appearance and durability of the radio-wave scattering sheet. Solution to Problem

To overcome the above problem, the present invention provides a protective-layer-equipped radio-wave scattering sheet including: a metamaterial-structured radio-wave scattering sheet that, when an radio-wave scattering surface having a specific metal pattern formed on a dielectric substrate receives radio- waves in a specific frequency band, scatters the radio- waves in multiple directions; and a protective layer that covers the radio-wave scattering surface of the radio-wave scattering sheet to protect the metal pattern, at least an outer surface of the protective layer being opaque. The protective layer has a thickness in a range of 0.25 mm to 3.0 mm at a portion covering the radio-wave scattering surface and has a relative permittivity in a range of 2.0 to 4.0.

In the above configuration, the protective layer may be made of a single material having a thickness in a range of 0.25 mm to 2.0 mm at a portion covering the radio-wave scattering surface and having a relative permittivity in a range of 2.0 to 3.0.

In the above configuration, the protective layer may have a two-layer structure including a lower protective layer disposed on the radio-wave scattering surface and an upper protective layer disposed on the lower protective layer, and a total thickness of the lower protective layer and the upper protective layer is in a range of 0.5 mm to 1.0 mm, and a relative permittivity of the entire protective layer including the lower protective layer and the upper protective layer is in a range of 2.0 to 3.0.

### Advantageous Effects of Invention

With the protective-layer-equipped radio-wave scattering sheet according to the present invention, it is possible to improve, with the protective layer, the appearance and durability of the radio-wave scattering sheet, and to limit a decrease in the diffusion coefficient of the radio-wave scattering sheet to 10% or less.

### Brief Description of Drawings

[Fig. 1] Fig. 1(A) is a schematic vertical sectional view of a protective-layer-equipped radio-wave scattering sheet according to a first embodiment, and Fig. 1(B) is a schematic vertical sectional view of a protective-layer-equipped radio-wave scattering sheet according to a second embodiment.
[Fig. 2] Fig. 2 is a scattering characteristic diagram showing the scattering characteristics of an radio-wave scattering sheet to which a commercially available wallpaper is attached as a protective layer.
[Fig. 3] Fig. 3(A) is an explanatory diagram illustrating an example in which a protective-layer-equipped radio-wave scattering sheet is used in an office, and Fig. 3(B) is an explanatory diagram illustrating an example in which a protective-layer-equipped radio-wave scattering sheet is used outdoors.
[Fig. 4] Fig. 4 is a table showing first examples (Examples 1-01 to 1-12) conducted for Evaluation 1.
[Fig. 5] Fig. 5 is a table showing first comparative examples (Comparative Examples 1-01 to 1-10) conducted for Evaluation 1.
[Fig. 6] Fig. 6 is a table showing second examples (Examples 2-01 to 2-09) conducted for Evaluation 2.
[Fig. 7] Fig. 7 is a table showing Examples 2-10 to 2-19 of second comparative examples (Comparative Examples 2-01 to 2-10) examples conducted for Evaluation 2.
[Fig. 8] Fig. 8 is a table showing Examples 3-01 to 3-08 of the third examples conducted for Evaluation 3.
[Fig. 9] Fig. 9 is a table showing Examples 3-09 to 3-15 of the third examples conducted for Evaluation 3.
[Fig. 10] Fig. 10 is a table showing Comparative Examples 3-01 to 3-07 of the third comparative examples conducted for Evaluation 3.
[Fig. 11] Fig. 11 is a table showing Comparative Examples 3-08 to 3-14 of the third comparative examples conducted for Evaluation 3.

### Description of Embodiments

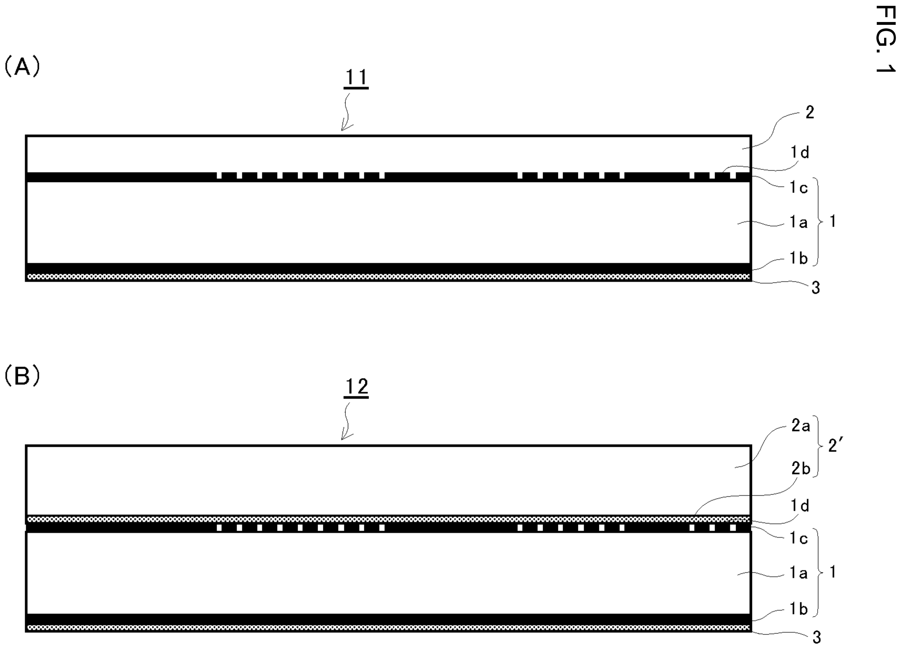

Hereinbelow, an embodiment of a protective-layer-equipped radio-wave scattering sheet of the present invention will be described in detail with reference to the accompanying drawings. Fig. 1(A) is a schematic vertical sectional view of a protective-layer-equipped radio-wave scattering sheet 11 of a first embodiment, and Fig. 1(B) is a schematic vertical sectional view of a protective-layer-equipped radio-wave scattering sheet 12 of a second embodiment.

The protective-layer-equipped radio-wave scattering sheet 11 of the first embodiment includes: an radio-wave scattering sheet 1 in which a back metal plate 1b and a front metal processed layer 1c are provided on surfaces of a dielectric substrate 1a; a dielectric layer 2, serving as a protective layer covering an radio-wave scattering surface 1d corresponding to the surface of the front metal processed layer 1c of the radio-wave scattering sheet 1; and an adhesive layer 3 provided on the outer surface (lower surface) of the back metal plate 1b so that the radio-wave scattering sheet 1 is attached to a wall surface, a ceiling, or the like.

In the radio-wave scattering sheet 1, a glass epoxy substrate (grade: FR4) having a thickness of about 0.68 mm and a relative permittivity of 4.5 is used as the dielectric substrate 1a, a metal film (for example, copper foil) of about 60 µm formed on one surface of the dielectric substrate 1a is used as the back metal plate 1b, and a metal film (for example, copper foil) of about 60 µm formed on the other surface of the dielectric substrate 1a is used as the front metal processed layer 1c, on which a specific metal pattern is formed by processing the metal film by etching or the like. In the radio-wave scattering sheet 1, the front metal processed layer 1c is formed to have a patch structure in which regions having a reflective phase of 0° and regions having a reflective phase of 180° are combined in a unit surface (for example, a surface of 180 mm × 180 mm) so as to achieve a metamaterial structure capable of scattering, at wide angles, radio-waves incident on the radio-wave scattering surface 1d from multiple directions. The radio-wave scattering sheet 1 of this embodiment was designed in accordance with radio-waves in the 28 GHz band, which was selected as a specific frequency band. The total thickness of the radio-wave scattering sheet 1 including the dielectric substrate 1a, the back metal plate 1b, and the front metal processed layer 1c is about 0.8 mm.

The dielectric layer 2 may be formed by applying a coating material or the like to the radio-wave scattering surface 1d of the radio-wave scattering sheet 1 so that the layer has a uniform thickness, or may be formed by attaching a plate member made of an adhesive material to the radio-wave scattering surface 1d of the radio-wave scattering sheet 1. Note that, if the dielectric layer 2 is made of an opaque material, the front metal processed layer 1c is not visible. Thus, the appearance of the protective-layer-equipped radio-wave scattering sheet 11 can be improved. The surface of the dielectric layer 2 does not necessarily have to be single-colored, and may be multi-colored. For example, use of multiple types of coating materials having the same relative permittivity but different colors produces a multicolor pattern on the surface of the dielectric layer 2. The material of the dielectric layer 2 may be selected from a variety of materials. The incoming radio-waves enter the dielectric layer 2 and reach the radio-wave scattering surface 1d, and the scattered waves from the radio-wave scattering surface 1d are transmitted through the dielectric layer 2 and emitted to the outside. Hence, it is considered that the thickness and permittivity (hereinbelow, a relative permittivity defined as the ratio of the permittivity of the material to the permittivity of vacuum is used) of the dielectric layer 2 are involved in the scattering characteristics of the protective-layer-equipped radio-wave scattering sheet 11 to no small extent.

Meanwhile, the protective-layer-equipped radio-wave scattering sheet 12 of the second embodiment includes a dielectric layer 2', serving as a protective layer covering the radio-wave scattering surface 1d corresponding to the surface of the front metal processed layer 1c of the radio-wave scattering sheet 1, and an adhesive layer 3 provided on the outer surface of the back metal plate 1b so that the radio-wave scattering sheet 1 is attached to a wall surface, a ceiling, or the like. The dielectric layer 2' has a two-layer structure in which an adhesive layer 2b, serving as a lower protective layer, is provided on the lower surface of a surface layer 2a, serving as an upper protective layer, and is adhered to the radio-wave scattering surface 1d of the radio-wave scattering sheet 1 by the stickiness of the adhesive layer 2b. If the surface layer 2a of the dielectric layer 2' is made of an opaque material, the front metal processed layer 1c is not visible. Thus, the appearance of the protective-layer-equipped radio-wave scattering sheet 12 can be improved. The materials of the surface layer 2a and the adhesive layer 2b may be selected from a variety of materials. It is considered that the overall thickness of the protective layer (dielectric layer 2') and the permittivity of the entire protective layer (dielectric layer 2') are involved in the scattering characteristics of the protective-layer-equipped radio-wave scattering sheet 12 to no small extent. The protective layer does not necessarily have to have a two-layer structure, and may have a multilayer structure, which has three or more layers, including a printed layer, a surface coating layer, and the like.

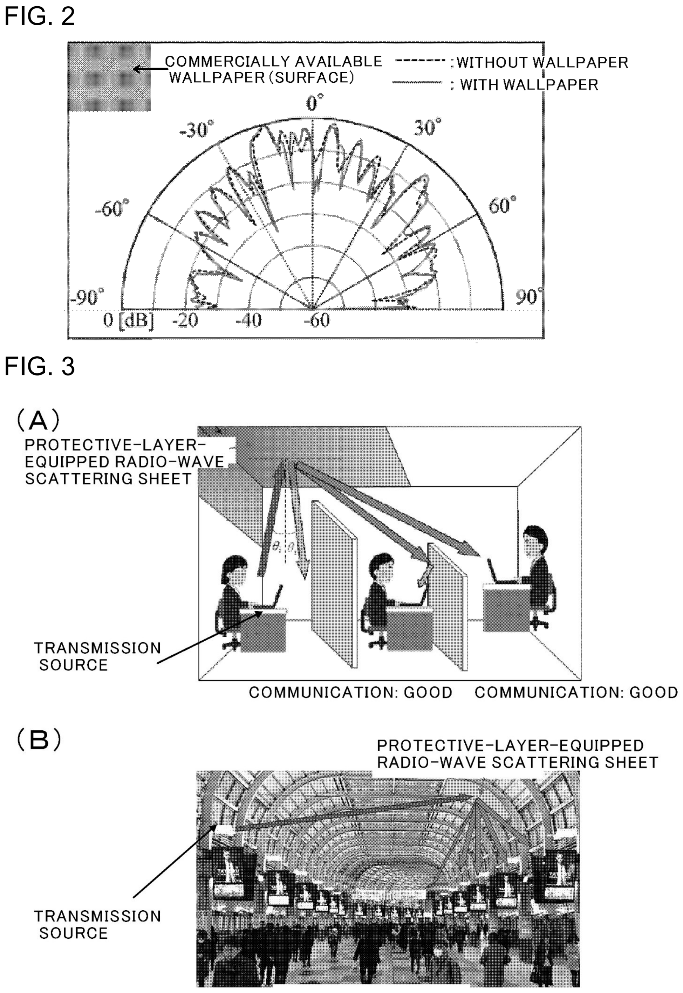

Fig. 2 shows the scattering characteristics of a protective-layer-equipped radio-wave scattering sheet 12, which is obtained by attaching a commercially available wallpaper, for example, a vinyl-chloride resin sheet (estimated relative permittivity is 3.0) having a thickness of about 0.4 mm, serving as a protective layer, to the radio-wave scattering sheet 1. For comparison, the scattering characteristics of the radio-wave scattering sheet 1 alone are shown by a broken line. The scattering pattern of the protective-layer-equipped radio-wave scattering sheet 12 does not completely match the scattering pattern of the radio-wave scattering sheet 1 without the wallpaper, but the same result was obtained. Thus, it was confirmed through the experiment that the radio-wave scattering sheet 1 had a sufficient function even when the wallpaper serving as the protective layer is attached to the radio-wave scattering surface 1d. Accordingly, as shown in Fig. 3(A), by attaching the protective-layer-equipped radio-wave scattering sheets 11 and 12 to a wall surface or a ceiling in an office, or as shown in Fig. 3(B), by arranging the protective-layer-equipped radio-wave scattering sheets 11 and 12 outdoors where there is a shielding object, radio- waves of 28 GHz band transmitted from the transmission source can be delivered to a wide area, and thus, the communication quality can be improved. Moreover, in the protective-layer-equipped radio-wave scattering sheets 11 and 12, the front metal processed layer 1c of the radio-wave scattering sheet 1 is protected by the dielectric layers 2 and 2'. Thus, deterioration over time can be suppressed, and the appearance can be improved such that the protective-layer-equipped radio-wave scattering sheets 11 and 12 blend in with the surrounding environment.

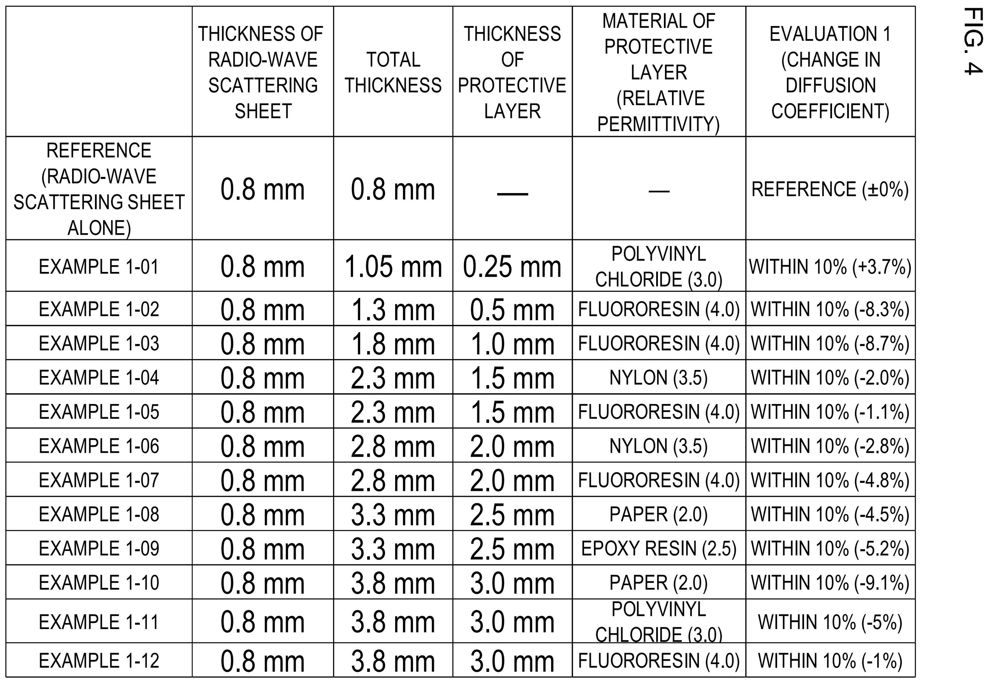

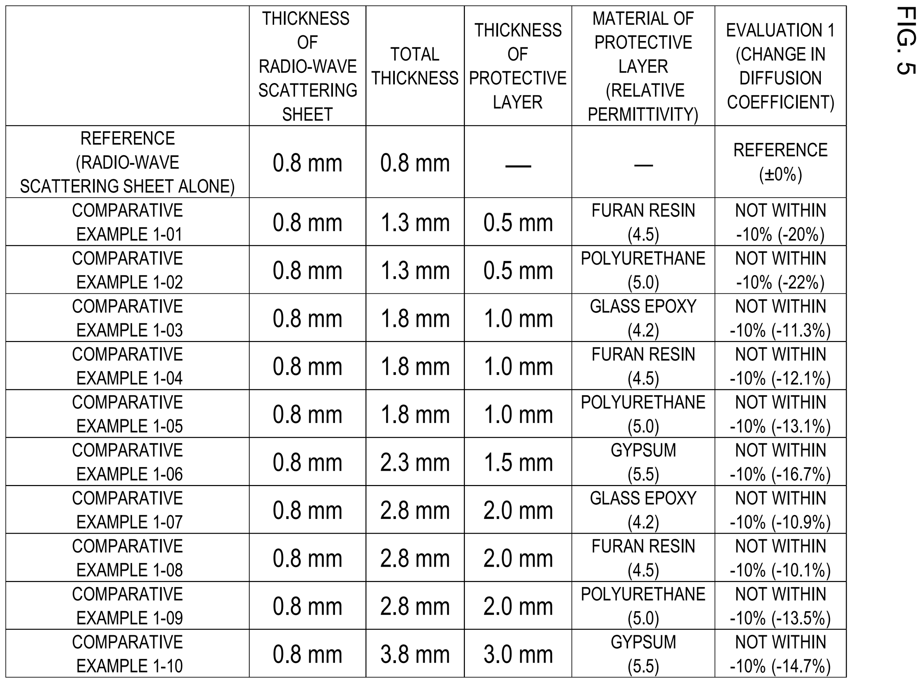

Next, it is verified what conditions of the protective layer (dielectric layer 2) are effective to obtain the protective-layer-equipped radio-wave scattering sheet 11 that does not significantly impair the scattering characteristics of the radio-wave scattering sheet 1. First, first examples (Examples 1-01 to 1-12), which were conducted to evaluate how much the diffusion coefficient of the protective-layer-equipped radio-wave scattering sheet 11 changes, are shown in Fig. 4. In the first examples, the thickness and relative permittivity of the protective layer formed on the radio-wave scattering surface 1d of the radio-wave scattering sheet 1 having a thickness of 0.8 mm described above are varied, and it is evaluated whether the change in the diffusion coefficient relative to that of the reference radio-wave scattering sheet 1 falls within a decrease of 10% or exceeds a decrease of 10% (hereinbelow, referred to as Evaluation 1). Furthermore, the examples in which the change in the diffusion coefficient exceeds a decrease of 10% are listed as first comparative examples (Comparative Examples 1-01 to 1-10) in Fig. 5.

In Example 1-01, a polyvinyl chloride layer (relative permittivity: 3.0) having a thickness of 0.25 mm was provided as a protective layer so that the total thickness of the protective-layer-equipped radio-wave scattering sheet 11 was 1.05 mm. The diffusion coefficient was +3.7%, which was higher than the diffusion coefficient of the reference radio-wave scattering sheet 1. Accordingly, Evaluation 1 was within a decrease of 10%. In Example 1-01, the diffusion coefficient of the protective-layer-equipped radio-wave scattering sheet 11, which is provided with the protective layer (dielectric layer 2), is higher than the diffusion coefficient of the reference radio-wave scattering sheet 1. Although the mechanism is not clear, the protective-layer-equipped radio-wave scattering sheet 11 provided with a protective layer satisfying appropriate conditions may have an improved degree of directional diffusion compared to the radio-wave scattering sheet 1 alone. This will be verified in Examples 2 and 3 below.

In Example 1-02, a fluororesin layer (relative permittivity: 4.0) having a thickness of 0.5 mm was provided as a protective layer so that the total thickness of the protective-layer-equipped radio-wave scattering sheet 11 was 1.3 mm. The change in the diffusion coefficient was -8.3%, which was a decrease not exceeding 10% relative to the diffusion coefficient of the reference radio-wave scattering sheet 1. Accordingly, Evaluation 1 was within a decrease of 10%. In Example 1-03, a fluororesin layer (relative permittivity: 4.0) having a thickness of 1.0 mm was provided as a protective layer so that the total thickness of the protective-layer-equipped radio-wave scattering sheet 11 was 1.8 mm. The change in the diffusion coefficient was -8.7%, which was a decrease not exceeding 10% relative to the diffusion coefficient of the reference radio-wave scattering sheet 1. Accordingly, Evaluation 1 was within a decrease of 10%. The results of Examples 1-01 to 1-03 show that, when the thickness of the protective layer is in the range of 0.25 mm to 1.0 mm and the relative permittivity of the protective layer is in the range of 3.0 to 4.0, the change in the diffusion coefficient relative to that of the reference radio-wave scattering sheet 1 falls within a decrease of 10%.

In Example 1-04, a nylon layer (relative permittivity: 3.5) having a thickness of 1.5 mm was provided as a protective layer so that the total thickness of the protective-layer-equipped radio-wave scattering sheet 11 was 2.3 mm. The change in the diffusion coefficient was -2.0%, which was a decrease not exceeding 10% relative to the diffusion coefficient of the reference radio-wave scattering sheet 1. Accordingly, Evaluation 1 was within a decrease of 10%. In Example 1-05, a fluororesin layer (relative permittivity: 4.0) having a thickness of 1.5 mm was provided as a protective layer so that the total thickness of the protective-layer-equipped radio-wave scattering sheet 11 was 2.3 mm. The change in the diffusion coefficient was -1.1%, which was a decrease not exceeding 10% relative to the diffusion coefficient of the reference radio-wave scattering sheet 1. Accordingly, Evaluation 1 was within a decrease of 10%. The results of Examples 1-04 and 1-05 show that, when the thickness of the protective layer is 1.5 mm and the relative permittivity of the protective layer is in the range of 3.5 to 4.0, the change in the diffusion coefficient relative to that of the reference radio-wave scattering sheet 1 falls within a decrease of 10%.

In Example 1-06, a nylon layer (relative permittivity: 3.5) having a thickness of 2.0 mm was provided as a protective layer so that the total thickness of the protective-layer-equipped radio-wave scattering sheet 11 was 2.8 mm. The change in the diffusion coefficient was -2.8%, which was a decrease not exceeding 10% relative to the diffusion coefficient of the reference radio-wave scattering sheet 1. Accordingly, Evaluation 1 was within a decrease of 10%. In Example 1-07, a fluororesin layer (relative permittivity: 4.0) having a thickness of 2.0 mm was provided as a protective layer so that the total thickness of the protective-layer-equipped radio-wave scattering sheet 11 was 2.8 mm. The change in the diffusion coefficient was -4.8%, which was a decrease not exceeding 10% relative to the diffusion coefficient of the reference radio-wave scattering sheet 1. Accordingly, Evaluation 1 was within a decrease of 10%. The results of Examples 1-06 and 1-07 show that, when the thickness of the protective layer is 2.0 mm and the relative permittivity of the protective layer is in the range of 3.5 to 4.0, the change in the diffusion coefficient relative to that of the reference radio-wave scattering sheet 1 falls within a decrease of 10%.

In Example 1-08, a sheet of paper having a thickness of 2.5 mm (relative permittivity: 2.0) was provided as a protective layer so that the total thickness of the protective-layer-equipped radio-wave scattering sheet 11 was 3.3 mm. The change in the diffusion coefficient was -4.5%, which was a decrease not exceeding 10% relative to the diffusion coefficient of the reference radio-wave scattering sheet 1. Accordingly, Evaluation 1 was within a decrease of 10%. In Example 1-09, an epoxy resin layer (relative permittivity: 2.5) having a thickness of 2.5 mm was provided as a protective layer so that the total thickness of the protective-layer-equipped radio-wave scattering sheet 11 was 3.3 mm. The change in the diffusion coefficient was -5.2%, which was a decrease not exceeding 10% relative to the diffusion coefficient of the reference radio-wave scattering sheet 1. Accordingly, Evaluation 1 was within a decrease of 10%. The results of Examples 1-08 and 1-09 show that, when the thickness of the protective layer is 2.5 mm and the relative permittivity of the protective layer is in the range of 2.0 to 2.5, the change in the diffusion coefficient relative to that of the reference radio-wave scattering sheet 1 falls within a decrease of 10%.

In Example 1-10, a sheet of paper (relative permittivity: 2.0) having a thickness of 3.0 mm was provided as a protective layer so that the total thickness of the protective-layer-equipped radio-wave scattering sheet 11 was 3.8 mm. The change in the diffusion coefficient was -9.1%, which was a decrease not exceeding 10% relative to the diffusion coefficient of the reference radio-wave scattering sheet 1. Accordingly, Evaluation 1 was within a decrease of 10%. In Example 1-11, a polyvinyl chloride layer (relative permittivity: 3.0) having a thickness of 3.0 mm was provided as a protective layer so that the total thickness of the protective-layer-equipped radio-wave scattering sheet 11 was 3.8 mm. The change in the diffusion coefficient was -5%, which was a decrease not exceeding 10% relative to the diffusion coefficient of the reference radio-wave scattering sheet 1. Accordingly, Evaluation 1 was within a decrease of 10%. In Example 1-12, a fluororesin layer (relative permittivity: 4.0) having a thickness of 3.0 mm was provided as a protective layer so that the total thickness of the protective-layer-equipped radio-wave scattering sheet 11 was 3.8 mm. The change in the diffusion coefficient was -1%, which was a decrease not exceeding 10% relative to the diffusion coefficient of the reference radio-wave scattering sheet 1. Accordingly, Evaluation 1 was within a decrease of 10%. The results of Examples 1-10 to 1-12 show that, when the thickness of the protective layer is 3.0 mm and the relative permittivity of the protective layer is in the range of 2.0 to 4.0, the change in the diffusion coefficient relative to that of the reference radio-wave scattering sheet 1 falls within a decrease of 10%.

In Comparative Example 1-01, a furan resin layer (relative permittivity: 4.5) having a thickness of 0.5 mm was provided as a protective layer so that the total thickness of the protective-layer-equipped radio-wave scattering sheet 11 was 1.3 mm. The change in the diffusion coefficient was -20%, which exceeded a decrease of 10% relative to the diffusion coefficient of the reference radio-wave scattering sheet 1. Accordingly, Evaluation 1 was not within a decrease of 10%. In Comparative Example 1-02, a polyurethane layer (relative permittivity: 5.0) having a thickness of 0.5 mm was provided as a protective layer so that the total thickness of the protective-layer-equipped radio-wave scattering sheet 11 was 1.3 mm. The change in the diffusion coefficient was -22%, which exceeded a decrease of 10% relative to the diffusion coefficient of the reference radio-wave scattering sheet 1. Accordingly, Evaluation 1 was not within a decrease of 10%. The results of Comparative Examples 1-01 and 1-02 show that, even when the thickness of the protective layer is 0.5 mm, if the relative permittivity of the protective layer is in the range of 4.5 to 5.0, the change in the diffusion coefficient relative to that of the reference radio-wave scattering sheet 1 exceeds a decrease of 10%.

In Comparative Example 1-03, a glass epoxy layer (relative permittivity: 4.2) having a thickness of 1.0 mm was provided as a protective layer so that the total thickness of the protective-layer-equipped radio-wave scattering sheet 11 was 1.8 mm. The change in the diffusion coefficient was -11.3%, which exceeded a decrease of 10% relative to the diffusion coefficient of the reference radio-wave scattering sheet 1. Accordingly, Evaluation 1 was not within a decrease of 10%. In Comparative Example 1-04, a furan resin layer (relative permittivity: 4.5) having a thickness of 1.0 mm was provided as a protective layer so that the total thickness of the protective-layer-equipped radio-wave scattering sheet 11 was 1.8 mm. The diffusion coefficient was -12.1%, which exceeded a decrease of 10% relative to the diffusion coefficient of the reference radio-wave scattering sheet 1. Accordingly, Evaluation 1 was not within a decrease of 10%. In Comparative Example 1-05, a polyurethane layer (relative permittivity: 5.0) having a thickness of 1.0 mm was provided as a protective layer so that the total thickness of the protective-layer-equipped radio-wave scattering sheet 11 was 1.8 mm. The change in the diffusion coefficient was -13.1%, which exceeded a decrease of 10% relative to the diffusion coefficient of the reference radio-wave scattering sheet 1. Accordingly, Evaluation 1 was not within a decrease of 10%. The results of Comparative Examples 1-03 to 1-05 show that, even when the thickness of the protective layer is 1.0 mm, if the relative permittivity of the protective layer is in the range of 4.2 to 5.0, the change in the diffusion coefficient relative to that of the reference radio-wave scattering sheet 1 exceeds a decrease of 10%.

In Comparative Example 1-06, a gypsum layer (relative permittivity: 5.5) having a thickness of 1.5 mm was provided as a protective layer so that the total thickness of the protective-layer-equipped radio-wave scattering sheet 11 was 2.3 mm. The change in the diffusion coefficient was -16.7%, which exceeded a decrease of 10% relative to the diffusion coefficient of the reference radio-wave scattering sheet 1. Accordingly, Evaluation 1 was not within a decrease of 10%. The result of Comparative Example 1-06 shows that, even when the thickness of the protective layer is 1.5 mm, if the relative permittivity of the protective layer is 5.5, the change in the diffusion coefficient relative to that of the reference radio-wave scattering sheet 1 exceeds a decrease of 10%.

In Comparative Example 1-07, a glass epoxy layer (relative permittivity: 4.2) having a thickness of 2.0 mm was provided as a protective layer so that the total thickness of the protective-layer-equipped radio-wave scattering sheet 11 was 2.8 mm. The change in the diffusion coefficient was -10.9%, which exceeded a decrease of 10% relative to the diffusion coefficient of the reference radio-wave scattering sheet 1. Accordingly, Evaluation 1 was not within a decrease of 10%. In Comparative Example 1-08, a furan resin layer (relative permittivity: 4.5) having a thickness of 2.0 mm was provided as a protective layer so that the total thickness of the protective-layer-equipped radio-wave scattering sheet 11 was 2.8 mm. The change in the diffusion coefficient was -10.1%, which exceeded a decrease of 10% relative to the diffusion coefficient of the reference radio-wave scattering sheet 1. Accordingly, Evaluation 1 was not within a decrease of 10%. In Comparative Example 1-09, a polyurethane layer (relative permittivity: 5.0) having a thickness of 2.0 mm was provided as a protective layer so that the total thickness of the protective-layer-equipped radio-wave scattering sheet 11 was 2.8 mm. The change in the diffusion coefficient was -13.5%, which exceeded a decrease of 10% relative to the diffusion coefficient of the reference radio-wave scattering sheet 1. Accordingly, Evaluation 1 was not within a decrease of 10%. The results of Comparative Examples 1-07 to 29 show that, even when the thickness of the protective layer is 2.0 mm, if the relative permittivity of the protective layer is in the range of 4.2 to 5.0, the change in the diffusion coefficient relative to that of the reference radio-wave scattering sheet 1 exceeds a decrease of 10%.

In Comparative Example 1-10, a gypsum layer (relative permittivity: 5.5) having a thickness of 3.0 mm was provided as a protective layer so that the total thickness of the protective-layer-equipped radio-wave scattering sheet 11 was 3.8 mm. The change in the diffusion coefficient was -14.7%, which exceeded a decrease of 10% relative to the diffusion coefficient of the reference radio-wave scattering sheet 1. Accordingly, Evaluation 1 was not within a decrease of 10%. The result of Comparative Example 1-10 shows that, when the thickness of the protective layer is 3.0 mm and the relative permittivity of the protective layer is 5.5, the change in the diffusion coefficient relative to that of the reference radio-wave scattering sheet 1 exceeds a decrease of 10%.

Based on the results of the first examples described above, if the dielectric layer 2 serving as the protective layer has a thickness in the range of 0.25 mm to 3.0 mm at a portion covering the radio-wave scattering surface 1d and a relative permittivity in the range of 2.0 to 4.0, the change in the diffusion coefficient relative to that of the reference radio-wave scattering sheet 1 falls within a decrease of 10%. Because the protective-layer-equipped radio-wave scattering sheet 11 provided with the dielectric layer 2 that satisfies the above conditions as a protective layer can realize a degree of directional diffusion close to that of the radio-wave scattering sheet 1 used alone, the protective-layer-equipped radio-wave scattering sheet 11 can contribute to improvement of communication quality not only in the 28 GHz band but also in microwaves and millimeter waves. Moreover, the protective-layer-equipped radio-wave scattering sheet 11, in which the front metal processed layer 1c of the radio-wave scattering sheet 1 is protected with the dielectric layer 2, can suppress deterioration over time and can improve the appearance such that the protective-layer-equipped radio-wave scattering sheet 11 blends in with the surrounding environment. Examples 1 show only the protective-layer-equipped radio-wave scattering sheet 11 in which a single-layer dielectric layer 2 is used as the protective layer. However, also in the protective-layer-equipped radio-wave scattering sheet 12 in which a double-layer dielectric layer 2' is used as the protective layer, if the thickness of the layer covering the radio-wave scattering surface 1d is in the range of 0.25 mm to 3.0 mm and the dielectric layer 2' having a relative permittivity in the range of 2.0 to 4.0 is used, the change in the diffusion coefficient relative to that of the reference radio-wave scattering sheet 1 falls within a decrease of 10%.

The upper limit of the thickness of the dielectric layer 2 at which the change in the diffusion coefficient relative to that of the reference radio-wave scattering sheet 1 falls within a decrease of 10% was set at 3.0 mm in consideration of the thickness of the coating material used as the protective layer and the thickness of the actual wallpaper. If the thickness of the protective layer exceeds 3.0 mm, the durability is improved, but a problem associated with weight or the like arises, making handling of the protective-layer-equipped radio-wave scattering sheets 11 and 12 inconvenient. In addition, in order to safely keep the protective-layer-equipped radio-wave scattering sheets 11 and 12 attached to a wall or a ceiling, an adhesive layer 3 having very strong adhesive performance needs to be provided, which impairs the practicality. In consideration of the practical range of thickness of the protective layer, it was determined that it is appropriate to set the upper limit of the thickness of the protective layer provided on the radio-wave scattering sheet 1 to 3.0 mm.

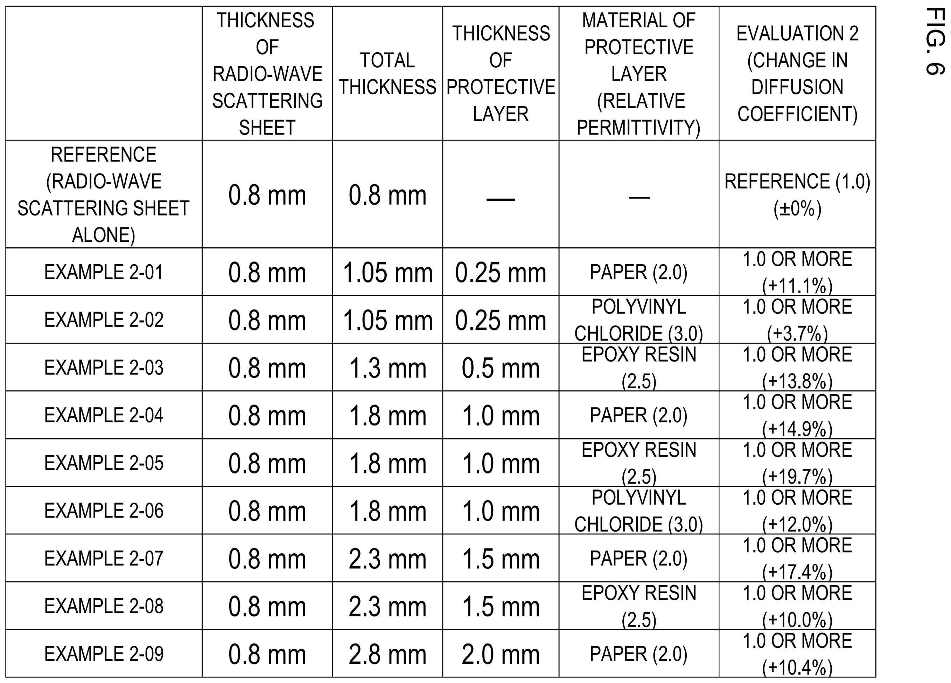

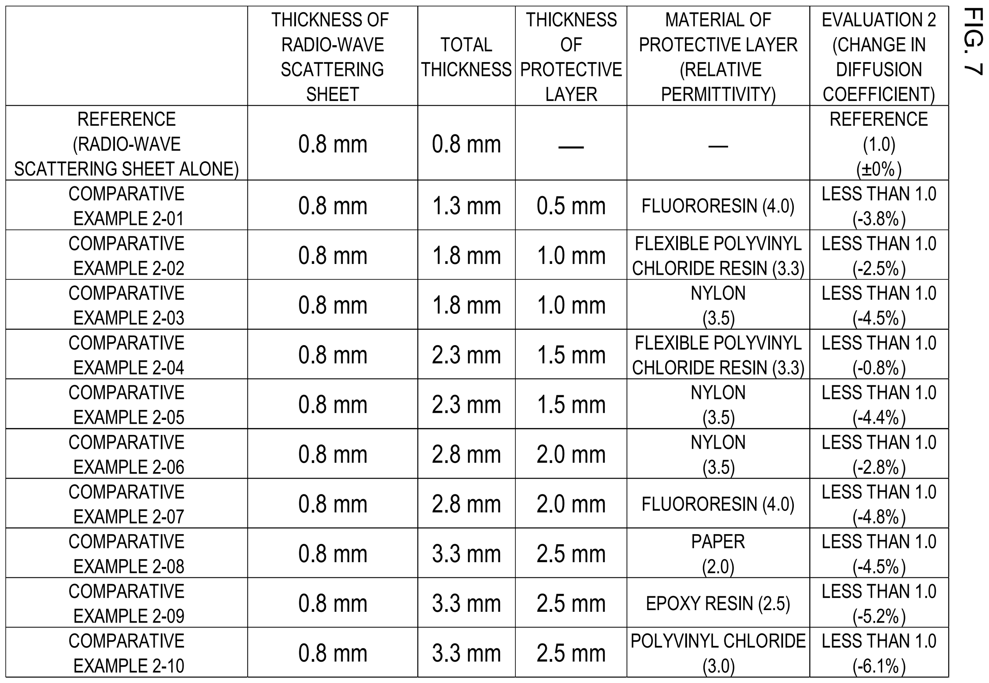

Next, second examples (Examples 2-01 to 2-09) conducted to evaluate an increase or decrease in the diffusion coefficient of the protective-layer-equipped radio-wave scattering sheet 11 are shown in Fig. 6. In the second examples, the thickness and relative permittivity of the protective layer formed on the radio-wave scattering surface 1d of the radio-wave scattering sheet 1 having a thickness of 0.8 mm described above are varied, and it is evaluated whether a degree of directional diffusion higher than or equal to the diffusion coefficient (reference value: 1.0) of the reference radio-wave scattering sheet 1 is obtained (1.0 or more) or the reference value is not reached (less than 1.0) (hereinbelow, referred to as Evaluation 2). Furthermore, the examples in which the diffusion coefficient was decreased are listed as second comparative examples in Fig. 7 (Comparative Examples 2-01 to 2-10).

In Example 2-01, a sheet of paper (relative permittivity: 2.0) having a thickness of 0.25 mm was provided as a protective layer so that the total thickness of the protective-layer-equipped radio-wave scattering sheet 11 was 1.05 mm. Because the change in the diffusion coefficient was +11.1%, Evaluation 2 was 1.0 or more. In Example 2-02, a polyvinyl chloride layer (relative permittivity: 3.0) having a thickness of 0.25 mm was provided as a protective layer so that the total thickness of the protective-layer-equipped radio-wave scattering sheet 11 was 1.05 mm. Because the diffusion coefficient was +3.7%, Evaluation 2 was 1.0 or more. In Example 2-03, an epoxy resin layer (relative permittivity: 2.5) having a thickness of 0.5 mm was provided as a protective layer so that the total thickness of the protective-layer-equipped radio-wave scattering sheet 11 was 1.3 mm. Because the diffusion coefficient was +13.8%, Evaluation 2 was 1.0 or more. The results of Examples 2-01 to 2-03 show that, when the thickness of the protective layer is in the range of 0.25 mm to 0.5 mm and the relative permittivity of the protective layer is in the range of 2.0 to 3.0, the diffusion coefficient is increased to a value not less than that of the reference radio-wave scattering sheet 1, and the radio-wave scattering characteristics are improved.

In Example 2-04, a sheet of paper (relative permittivity: 2.0) having a thickness of 1.0 mm was provided as a protective layer so that the total thickness of the protective-layer-equipped radio-wave scattering sheet 11 was 1.8 mm. Because the diffusion coefficient was +14.9%, Evaluation 2 was 1.0 or more. In Example 2-05, an epoxy resin layer (relative permittivity: 2.5) having a thickness of 1.0 mm was provided as a protective layer so that the total thickness of the protective-layer-equipped radio-wave scattering sheet 11 was 1.8 mm. Because the diffusion coefficient was +19.7%, Evaluation 2 was 1.0 or more. In Example 2-06, a polyvinyl chloride layer (relative permittivity: 3.0) having a thickness of 1.0 mm was provided as a protective layer so that the total thickness of the protective-layer-equipped radio-wave scattering sheet 11 was 1.8 mm. Because the diffusion coefficient was +12.0%, Evaluation 2 was 1.0 or more. The results of Examples 2-04 to 2-06 show that, when the thickness of the protective layer is 1.0 mm and the relative permittivity of the protective layer is in the range of 2.0 to 3.0, the diffusion coefficient is increased to a value not less than that of the reference radio-wave scattering sheet 1, and the radio-wave scattering characteristics are improved.

In Example 2-07, a sheet of paper (relative permittivity: 2.0) having a thickness of 1.5 mm was provided as a protective layer so that the total thickness of the protective-layer-equipped radio-wave scattering sheet 11 was 2.3 mm. Because the diffusion coefficient was +17.4%, Evaluation 2 was 1.0 or more. In Example 2-08, an epoxy resin layer (relative permittivity: 2.5) having a thickness of 1.5 mm was provided as a protective layer so that the total thickness of the protective-layer-equipped radio-wave scattering sheet 11 was 2.3 mm. Because the diffusion coefficient was +10.0%, Evaluation 2 was 1.0 or more. In Example 2-09, a sheet of paper (relative permittivity: 2.0) having a thickness of 2.0 mm was provided as a protective layer so that the total thickness of the protective-layer-equipped radio-wave scattering sheet 11 was 2.8 mm. Because the diffusion coefficient was +10.4%, Evaluation 2 was 1.0 or more. The results of Examples 2-07 to 2-09 show that, when the thickness of the protective layer is in the range of 1.5 mm to 2.0 mm and the relative permittivity of the protective layer is in the range of 2.0 to 2.5, the diffusion coefficient is increased to a value not less than that of the reference radio-wave scattering sheet 1, and the radio-wave scattering characteristics are improved.

In Comparative Example 2-01, a fluororesin layer (relative permittivity: 4.0) having a thickness of 0.5 mm was provided as a protective layer so that the total thickness of the protective-layer-equipped radio-wave scattering sheet 11 was 1.3 mm. Because the diffusion coefficient was -3.8%, Evaluation 2 was less than 1.0. In Comparative Example 2-02, a flexible polyvinyl chloride resin layer (relative permittivity: 3.3) having a thickness of 1.0 mm was provided as a protective layer so that the total thickness of the protective-layer-equipped radio-wave scattering sheet 11 was 1.8 mm. Because the diffusion coefficient was - 2.5%, Evaluation 2 was less than 1.0. In Comparative Example 2-03, a nylon layer (relative permittivity: 3.5) having a thickness of 1.0 mm was provided as a protective layer so that the total thickness of the protective-layer-equipped radio-wave scattering sheet 11 was 1.8 mm. Because the diffusion coefficient was - 4.5%, Evaluation 2 was less than 1.0. The results of Comparative Examples 2-01 to 2-03 show that, even when the thickness of the protective layer is in the range of 0.5 mm to 1.0 mm, if the relative permittivity of the protective layer is in the range of 3.3 to 4.0, the diffusion coefficient is lower than that of the reference radio-wave scattering sheet 1, and the radio-wave scattering characteristics are lowered.

In Comparative Example 2-04, a flexible polyvinyl chloride resin layer (relative permittivity: 3.3) having a thickness of 1.5 mm was provided as a protective layer so that the total thickness of the protective-layer-equipped radio-wave scattering sheet 11 was 2.3 mm. Because the diffusion coefficient was - 0.8%, Evaluation 2 was less than 1.0. In Comparative Example 2-05, a nylon layer (relative permittivity: 3.5) having a thickness of 1.5 mm was provided as a protective layer so that the total thickness of the protective-layer-equipped radio-wave scattering sheet 11 was 2.3 mm. Because the diffusion coefficient was - 4.4%, Evaluation 2 was less than 1.0. The results of Comparative Examples 2-04 and 2-05 show that, even when the thickness of the protective layer is 1.5 mm, if the relative permittivity of the protective layer is in the range of 3.3 to 3.5, the diffusion coefficient is lower than that of the reference radio-wave scattering sheet 1, and the radio-wave scattering characteristics are lowered.

In Comparative Example 2-06, a nylon layer (relative permittivity: 3.5) having a thickness of 2.0 mm was provided as a protective layer so that the total thickness of the protective-layer-equipped radio-wave scattering sheet 11 was 2.8 mm. Because the diffusion coefficient was -2.8%, Evaluation 2 was less than 1.0. In Comparative Example 2-07, a fluororesin layer (relative permittivity: 4.0) having a thickness of 2.0 mm was provided as a protective layer so that the total thickness of the protective-layer-equipped radio-wave scattering sheet 11 was 2.8 mm. Because the diffusion coefficient was -4.8%, Evaluation 2 was less than 1.0. The results of Comparative Examples 2-06 and 2-07 show that, even when the thickness of the protective layer is 2.0 mm, if the relative permittivity of the protective layer is in the range of 3.5 to 4.0, the diffusion coefficient is lower than that of the reference radio-wave scattering sheet 1, and the radio-wave scattering characteristics are lowered.

In Comparative Example 2-08, a sheet of paper having a thickness of 2.5 mm (relative permittivity: 2.0) was provided as a protective layer so that the total thickness of the protective-layer-equipped radio-wave scattering sheet 11 was 3.3 mm. Because the diffusion coefficient was -4.5%, Evaluation 2 was less than 1.0. In Comparative Example 2-09, an epoxy resin layer (relative permittivity: 2.5) having a thickness of 2.5 mm was provided as a protective layer so that the total thickness of the protective-layer-equipped radio-wave scattering sheet 11 was 3.3 mm. Because the diffusion coefficient was -5.2%, Evaluation 2 was less than 1.0. In Comparative Example 2-10, a polyvinyl chloride layer (relative permittivity: 3.0) having a thickness of 2.5 mm was provided as a protective layer so that the total thickness of the protective-layer-equipped radio-wave scattering sheet 11 was 3.3 mm. Because the diffusion coefficient was -6.1%, Evaluation 2 was less than 1.0. The results of Comparative Examples 2-08 to 2-10 show that, when the thickness of the protective layer is 2.5 mm, even if the relative permittivity of the protective layer is in the range of 2.0 to 3.0, the diffusion coefficient is lower than that of the reference radio-wave scattering sheet 1, and the radio-wave scattering characteristics are lowered.

Based on the results of the second examples described above, if the thickness of the dielectric layer 2 serving as the protective layer has a thickness in the range of 0.25 mm to 2.0 mm at a portion covering the radio-wave scattering surface 1d and a relative permittivity in the range of 2.0 to 3.0, a degree of directional diffusion not less than the diffusion coefficient of the reference radio-wave scattering sheet 1 can be obtained. Because the protective-layer-equipped radio-wave scattering sheet 11 provided with the dielectric layer 2 that satisfies the above conditions as a protective layer can realize a degree of directional diffusion higher than or equal to that of the radio-wave scattering sheet 1 used alone, the protective-layer-equipped radio-wave scattering sheet 11 can greatly contribute to improvement of communication quality not only in the 28 GHz band but also in microwaves and millimeter waves.

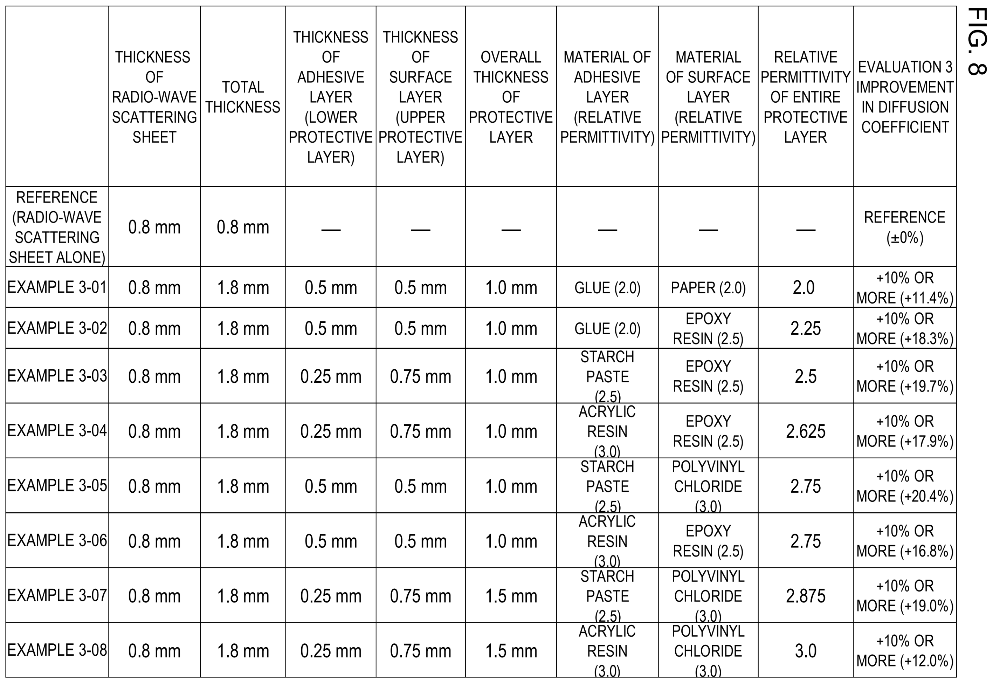

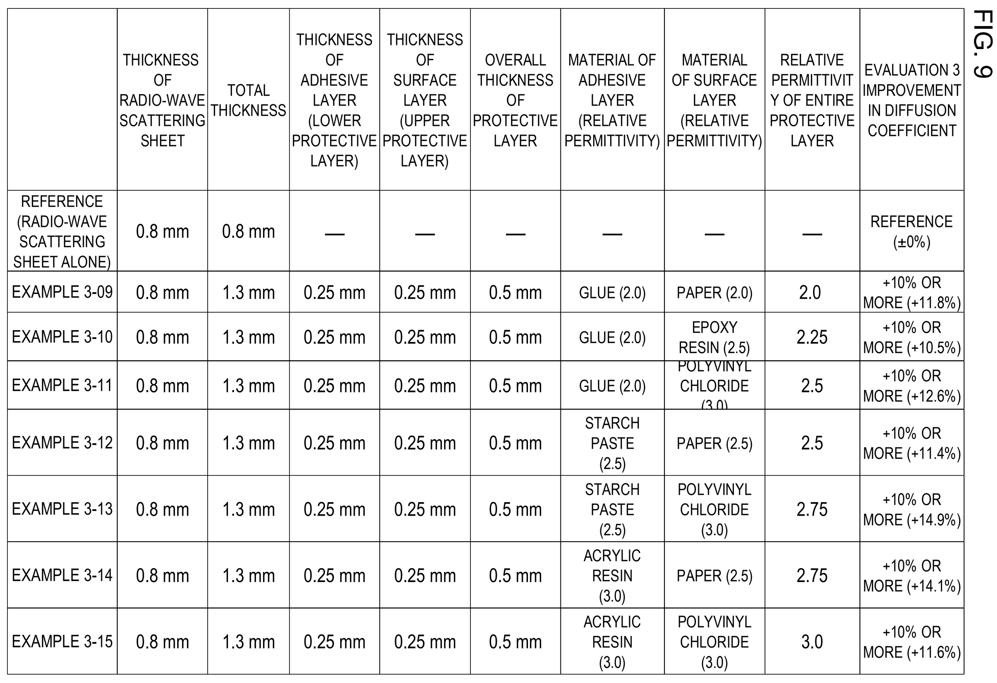

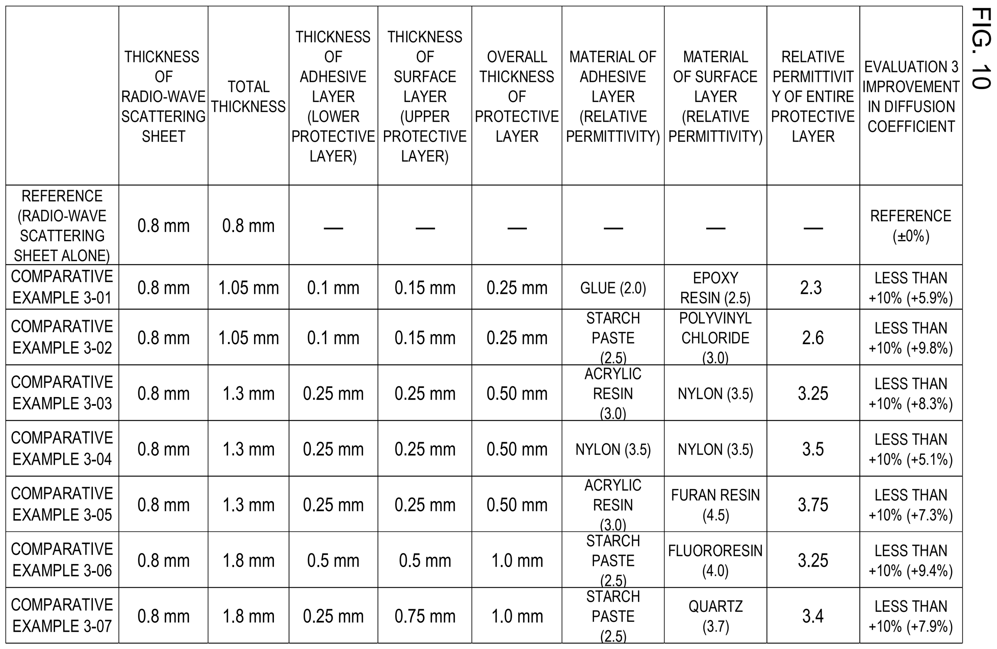

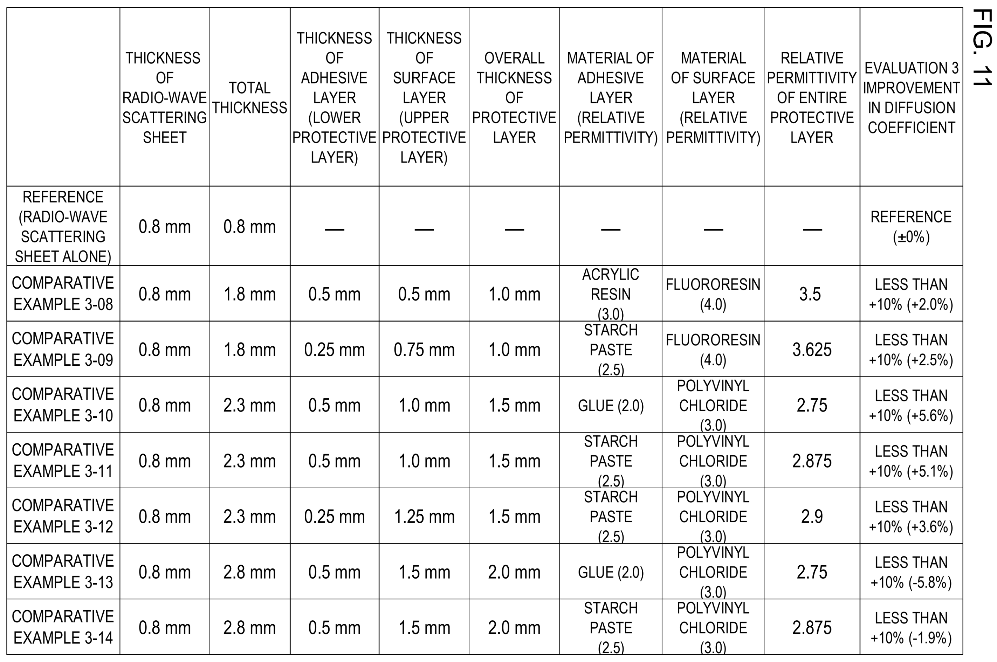

Next, third examples (Examples 3-01 to 3-15) conducted to evaluate the improvement in the diffusion coefficient of the protective-layer-equipped radio-wave scattering sheet 12, in which a dielectric layer 2' serving as a protective layer includes two layers, i.e., a surface layer 2a and an adhesive layer 2b, are shown in Figs. 8 and 9. In the protective-layer-equipped radio-wave scattering sheet 12 of the second embodiment described above, the overall thickness of the protective layer and the relative permittivity of the entire protective layer can be finely changed by variously combining the materials of the surface layer 2a and the adhesive layer 2b. Thus, in the third examples, the overall thickness of the protective layer and the relative permittivity of the entire protective layer formed on the radio-wave scattering surface 1d of the radio-wave scattering sheet 1 having a thickness of 0.8 mm described above are varied, and it is evaluated whether an improvement of 10% or more relative to the diffusion coefficient of the reference radio-wave scattering sheet 1 (reference value: ±0%) is obtained (+10% or more) or the improvement remains less than 10% (less than +10%) (hereinbelow, referred to as Evaluation 3). Furthermore, the examples in which the improvement in the diffusion coefficient is less than +10% are shown as third comparative examples in Figs. 10 and 11 (Comparative Examples 3-01 to 3-14).

In Example 3-01, a glue layer (relative permittivity: 2.0) having a thickness of 0.5 mm was provided as an adhesive layer and a sheet of paper (relative permittivity: 2.0) having a thickness of 0.5 mm was provided as a surface layer so that the total thickness of the protective-layer-equipped radio-wave scattering sheet 12 was 1.8 mm. The overall thickness of the protective layer was 1.0 mm, and the relative permittivity of the entire protective layer was 2.0. Because the improvement in the diffusion coefficient was +11.4%, Evaluation 3 was +10% or more. In Example 3-02, a glue layer (relative permittivity: 2.0) having a thickness of 0.5 mm was provided as an adhesive layer and an epoxy resin layer (relative permittivity: 2.5) having a thickness of 0.5 mm was provided as a surface layer so that the total thickness of the protective-layer-equipped radio-wave scattering sheet 12 was 1.8 mm. The overall thickness of the protective layer was 1.0 mm, and the relative permittivity of the entire protective layer was 2.25. Because the improvement in the diffusion coefficient was +18.3%, Evaluation 3 was +10% or more. In Example 3-03, a starch paste layer (relative permittivity: 2.5) having a thickness of 0.25 mm was provided as an adhesive layer and an epoxy resin layer (relative permittivity: 2.5) having a thickness of 0.75 mm was provided as a surface layer so that the total thickness of the protective-layer-equipped radio-wave scattering sheet 12 was 1.8 mm. The overall thickness of the protective layer was 1.0 mm, and the relative permittivity of the entire protective layer was 2.5. Because the improvement in the diffusion coefficient was +19.7%, Evaluation 3 was +10% or more. The results of Examples 3-01 to 3-03 show that, when the overall thickness of the protective layer is 1.0 mm and the relative permittivity of the entire protective layer is in the range of 2.0 to 2.5, an improvement of 10% or more is obtained relative to the diffusion coefficient of the reference radio-wave scattering sheet 1, and a higher improvement in the radio-wave scattering characteristics can be achieved.

In Example 3-04, an acrylic resin layer (relative permittivity: 3.0) having a thickness of 0.25 mm was provided as an adhesive layer and an epoxy resin layer (relative permittivity: 2.5) having a thickness of 0.75 mm was provided as a surface layer so that the total thickness of the protective-layer-equipped radio-wave scattering sheet 12 was 1.8 mm. The overall thickness of the protective layer was 1.0 mm, and the relative permittivity of the entire protective layer was 2.625. Because the improvement in the diffusion coefficient was +17.9%, Evaluation 3 was +10% or more. In Example 3-05, a starch paste layer (relative permittivity: 2.5) having a thickness of 0.5 mm was provided as an adhesive layer and a polyvinyl chloride layer (relative permittivity: 3.0) having a thickness of 0.5 mm was provided as a surface layer so that the total thickness of the protective-layer-equipped radio-wave scattering sheet 12 was 1.8 mm. The overall thickness of the protective layer was 1.0 mm, and the relative permittivity of the entire protective layer was 2.75. Because the improvement in the diffusion coefficient was +20.4%, Evaluation 3 was +10% or more. In Example 3-06, an acrylic resin layer (relative permittivity: 3.0) having a thickness of 0.5 mm was provided as an adhesive layer and an epoxy resin layer (relative permittivity: 2.5) having a thickness of 0.5 mm was provided as a surface layer so that the total thickness of the protective-layer-equipped radio-wave scattering sheet 12 was 1.8 mm. The overall thickness of the protective layer was 1.0 mm, and the relative permittivity of the entire protective layer was 2.75. Because the improvement in the diffusion coefficient was +16.8%, Evaluation 3 was +10% or more. In Example 3-07, a starch paste layer (relative permittivity: 2.5) having a thickness of 0.25 mm was provided as an adhesive layer and a polyvinyl chloride layer (relative permittivity: 3.0) having a thickness of 0.75 mm was provided as a surface layer so that the total thickness of the protective-layer-equipped radio-wave scattering sheet 12 was 1.8 mm. The overall thickness of the protective layer was 1.0 mm, and the relative permittivity of the entire protective layer was 2.875. Because the improvement in the diffusion coefficient was +19.0%, Evaluation 3 was +10% or more. In Example 3-08, an acrylic resin layer (relative permittivity: 3.0) having a thickness of 0.25 mm was provided as an adhesive layer and a polyvinyl chloride layer (relative permittivity: 3.0) having a thickness of 0.75 mm was provided as a surface layer so that the total thickness of the protective-layer-equipped radio-wave scattering sheet 12 was 1.8 mm. The overall thickness of the protective layer was 1.0 mm, and the relative permittivity of the entire protective layer was 3.0. Because the improvement in the diffusion coefficient was +12.0%, Evaluation 3 was +10% or more. The results of Examples 3-04 to 3-08 show that, when the overall thickness of the protective layer is 1.0 mm and the relative permittivity of the entire protective layer is in the range of 2.625 to 3.0, an improvement of 10% or more is obtained relative to the diffusion coefficient of the reference radio-wave scattering sheet 1, and a higher improvement in the radio-wave scattering characteristics can be achieved.

In Example 3-09, a glue layer (relative permittivity: 2.0) having a thickness of 0.25 mm was provided as an adhesive layer and a sheet of paper (relative permittivity: 2.0) having a thickness of 0.25 mm was provided as a surface layer so that the total thickness of the protective-layer-equipped radio-wave scattering sheet 12 was 1.3 mm. The overall thickness of the protective layer was 0.5 mm, and the relative permittivity of the entire protective layer was 2.0. Because the improvement in the diffusion coefficient was +11.8%, Evaluation 3 was +10% or more. In Example 3-10, a glue layer (relative permittivity: 2.0) having a thickness of 0.25 mm was provided as an adhesive layer and an epoxy resin layer (relative permittivity: 2.5) having a thickness of 0.25 mm was provided as a surface layer so that the total thickness of the protective-layer-equipped radio-wave scattering sheet 12 was 1.3 mm. The overall thickness of the protective layer was 0.5 mm, and the relative permittivity of the entire protective layer was 2.25. Because the improvement in the diffusion coefficient was +10.5%, Evaluation 3 was +10% or more. In Example 3-11, a glue layer (relative permittivity: 2.0) having a thickness of 0.25 mm was provided as an adhesive layer and a polyvinyl chloride layer (relative permittivity: 3.0) having a thickness of 0.25 mm was provided as a surface layer so that the total thickness of the protective-layer-equipped radio-wave scattering sheet 12 was 1.3 mm. The overall thickness of the protective layer was 0.5 mm, and the relative permittivity of the entire protective layer was 2.5. Because the improvement in the diffusion coefficient was +12.6%, Evaluation 3 was +10% or more. The results of Examples 3-09 to 3-11, in which the glue was used in common as the material of the adhesive layer, show that, when the overall thickness of the protective layer is 0.5 mm and the relative permittivity of the protective layer is in the range of 2.0 to 2.5, an improvement of 10% or more is obtained relative to the diffusion coefficient of the reference radio-wave scattering sheet 1, and a higher improvement in the radio-wave scattering characteristics can be achieved.

In Example 3-12, a starch paste layer (relative permittivity: 2.5) having a thickness of 0.25 mm was provided as an adhesive layer and a sheet of paper (relative permittivity: 2.5) having a thickness of 0.25 mm was provided as a surface layer so that the total thickness of the protective-layer-equipped radio-wave scattering sheet 12 was 1.3 mm. The overall thickness of the protective layer was 0.5 mm, and the relative permittivity of the entire protective layer was 2.5. Because the improvement in the diffusion coefficient was +11.4%, Evaluation 3 was +10% or more. In Example 3-13, a starch paste layer (relative permittivity: 2.5) having a thickness of 0.25 mm was provided as an adhesive layer and a polyvinyl chloride layer (relative permittivity: 3.0) having a thickness of 0.25 mm was provided as a surface layer so that the total thickness of the protective-layer-equipped radio-wave scattering sheet 12 was 1.3 mm. The overall thickness of the protective layer was 0.5 mm, and the relative permittivity of the entire protective layer was 2.75. Because the improvement in the diffusion coefficient was +14.9%, Evaluation 3 was +10% or more. The results of Examples 3-12 and 3-13, in which starch paste was used in common as the material of the adhesive layer, show that, when the overall thickness of the protective layer is 0.5 mm and the relative permittivity of the protective layer is in the range of 2.5 to 2.75, an improvement of 10% or more is obtained relative to the diffusion coefficient of the reference radio-wave scattering sheet 1, and a higher improvement in the radio-wave scattering characteristics can be achieved.

In Example 3-14, an acrylic resin layer (relative permittivity: 3.0) having a thickness of 0.25 mm was provided as an adhesive layer and a sheet of paper (relative permittivity: 2.5) having a thickness of 0.25 mm was provided as a surface layer so that the total thickness of the protective-layer-equipped radio-wave scattering sheet 12 was 1.3 mm. The overall thickness of the protective layer was 0.5 mm, and the relative permittivity of the entire protective layer was 2.75. Because the improvement in the diffusion coefficient was +14.1%, Evaluation 3 was +10% or more. In Example 3-15, an acrylic resin layer (relative permittivity: 3.0) having a thickness of 0.25 mm was provided as an adhesive layer and a polyvinyl chloride layer (relative permittivity: 3.0) having a thickness of 0.25 mm was provided as a surface layer so that the total thickness of the protective-layer-equipped radio-wave scattering sheet 12 was 1.3 mm. The overall thickness of the protective layer was 0.5 mm, and the relative permittivity of the entire protective layer was 3.0. Because the improvement in the diffusion coefficient was +11.6%, Evaluation 3 was +10% or more. The results of Examples 3-12 and 3-13, in which the acrylic resin was used in common as the material of the adhesive layer, show that when the overall thickness of the protective layer is 0.5 mm and the relative permittivity of the protective layer is in the range of 2.5 to 2.75, an improvement of 10% or more is obtained relative to the diffusion coefficient of the reference radio-wave scattering sheet 1, and a higher improvement in the radio-wave scattering characteristics can be achieved.

In Comparative Example 3-01, a glue layer (relative permittivity: 2.0) having a thickness of 0.1 mm was provided as an adhesive layer and an epoxy resin layer (relative permittivity: 2.5) having a thickness of 0.15 mm was provided as a surface layer so that the total thickness of the protective-layer-equipped radio-wave scattering sheet 12 was 1.05 mm. The overall thickness of the protective layer was 0.25 mm, and the relative permittivity of the entire protective layer was 2.3. Because the improvement in the diffusion coefficient was +5.9%, Evaluation 3 was less than +10%. In Comparative Example 3-02, a starch paste layer (relative permittivity: 2.5) having a thickness of 0.1 mm was provided as an adhesive layer and a polyvinyl chloride layer (relative permittivity: 3.0) having a thickness of 0.15 mm was provided as a surface layer so that the total thickness of the protective-layer-equipped radio-wave scattering sheet 12 was 1.05 mm. The overall thickness of the protective layer was 0.25 mm, and the relative permittivity of the entire protective layer was 2.6. Because the improvement in the diffusion coefficient was +9.8%, Evaluation 3 was less than +10%. The results of Comparative Examples 3-01 to 3-02 show that, when the overall thickness of the protective layer is 0.25 mm, which is less than 0.5 mm, even if the relative permittivity of the entire protective layer is in the range of 2.3 to 2.6, an improvement of 10% or more relative to the diffusion coefficient of the reference radio-wave scattering sheet 1 cannot be obtained, and the improvement in the radio-wave scattering characteristics is reduced to less than 10%.

In Comparative Example 3-03, an acrylic resin layer (relative permittivity: 3.0) having a thickness of 0.25 mm was provided as an adhesive layer and a nylon layer (relative permittivity: 3.5) having a thickness of 0.25 mm was provided as a surface layer so that the total thickness of the protective-layer-equipped radio-wave scattering sheet 12 was 1.3 mm. The overall thickness of the protective layer was 0.50 mm, and the relative permittivity of the entire protective layer was 3.25. Because the improvement in the diffusion coefficient was +8.3%, Evaluation 3 was less than +10%. In Comparative Example 3-04, a nylon layer (relative permittivity: 3.5) having a thickness of 0.25 mm was provided as an adhesive layer and a nylon layer (relative permittivity: 3.5) having a thickness of 0.25 mm was provided as a surface layer so that the total thickness of the protective-layer-equipped radio-wave scattering sheet 12 was 1.3 mm. The overall thickness of the protective layer was 0.50 mm, and the relative permittivity of the entire protective layer was 3.5. Because the improvement in the diffusion coefficient was +5.1%, Evaluation 3 was less than +10%. In Comparative Example 3-05, an acrylic resin layer (relative permittivity: 3.0) having a thickness of 0.25 mm was provided as an adhesive layer and a furan resin layer (relative permittivity: 4.5) having a thickness of 0.25 mm was provided as a surface layer so that the total thickness of the protective-layer-equipped radio-wave scattering sheet 12 was 1.3 mm. The overall thickness of the protective layer was 0.50 mm, and the relative permittivity of the entire protective layer was 3.75. Because the improvement in the diffusion coefficient was +7.3%, Evaluation 3 was less than +10%. The results of Comparative Examples 3-03 to 3-05 show that, even when the overall thickness of the protective layer is 0.5 mm, if the relative permittivity of the entire protective layer is in the range of 3.25 to 3.75, an improvement of 10% or more relative to the diffusion coefficient of the reference radio-wave scattering sheet 1 cannot be obtained, and the improvement in the radio-wave scattering characteristics is reduced to less than 10%.

In Comparative Example 3-06, a starch paste layer (relative permittivity: 2.5) having a thickness of 0.5 mm was provided as an adhesive layer and a fluororesin layer (relative permittivity: 4.0) having a thickness of 0.5 mm was provided as a surface layer so that the total thickness of the protective-layer-equipped radio-wave scattering sheet 12 was 1.8 mm. The overall thickness of the protective layer was 1.0 mm, and the relative permittivity of the entire protective layer was 3.25. Because the improvement in the diffusion coefficient was +9.4%, Evaluation 3 was less than +10%. In Comparative Example 3-07, a starch paste layer (relative permittivity: 2.5) having a thickness of 0.25 mm was provided as an adhesive layer and a quartz layer (relative permittivity: 3.7) having a thickness of 0.75 mm was provided as a surface layer so that the total thickness of the protective-layer-equipped radio-wave scattering sheet 12 was 1.8 mm. The overall thickness of the protective layer was 1.0 mm, and the relative permittivity of the entire protective layer was 3.4. Because the improvement in the diffusion coefficient was +7.9%, Evaluation 3 was less than +10%. In Comparative Example 3-08, an acrylic resin layer (relative permittivity: 3.0) having a thickness of 0.5 mm was provided as an adhesive layer and a fluororesin layer (relative permittivity: 4.0) having a thickness of 0.5 mm was provided as a surface layer so that the total thickness of the protective-layer-equipped radio-wave scattering sheet 12 was 1.8 mm. The overall thickness of the protective layer was 1.0 mm, and the relative permittivity of the entire protective layer was 3.5. Because the improvement in the diffusion coefficient was +2.0%, Evaluation 3 was less than +10%. In Comparative Example 3-09, a starch paste layer (relative permittivity: 2.5) having a thickness of 0.25 mm was provided as an adhesive layer and a fluororesin layer (relative permittivity: 4.0) having a thickness of 0.75 mm was provided as a surface layer so that the total thickness of the protective-layer-equipped radio-wave scattering sheet 12 was 1.8 mm. The overall thickness of the protective layer was 1.0 mm, and the relative permittivity of the entire protective layer was 3.625. Because the improvement in the diffusion coefficient was +2.5%, Evaluation 3 was less than +10%. The results of Comparative Examples 3-06 to 3-09 show that, even when the overall thickness of the protective layer is 1.0 mm, if the relative permittivity of the entire protective layer is in the range of 3.25 to 3.625, an improvement of 10% or more cannot be obtained relative to the diffusion coefficient of the reference radio-wave scattering sheet 1, and the improvement in the radio-wave scattering characteristics is reduced to less than 10%.

In Comparative Example 3-10, a glue layer (relative permittivity: 2.0) having a thickness of 0.5 mm was provided as an adhesive layer and a polyvinyl chloride layer (relative permittivity: 3.0) having a thickness of 1.0 mm was provided as a surface layer so that the total thickness of the protective-layer-equipped radio-wave scattering sheet 12 was 2.3 mm. The overall thickness of the protective layer was 1.5 mm, and the relative permittivity of the entire protective layer was 2.75. Because the improvement in the diffusion coefficient was +5.6%, Evaluation 3 was less than +10%. In Comparative Example 3-11, a starch paste layer (relative permittivity: 2.5) having a thickness of 0.5 mm was provided as an adhesive layer and a polyvinyl chloride layer (relative permittivity: 3.0) having a thickness of 1.0 mm was provided as a surface layer so that the total thickness of the protective-layer-equipped radio-wave scattering sheet 12 was 2.3 mm. The overall thickness of the protective layer was 1.5 mm, and the relative permittivity of the entire protective layer was 2.875. Because the improvement in the diffusion coefficient was +5.1%, Evaluation 3 was less than +10%. In Comparative Example 3-12, a starch paste layer (relative permittivity: 2.5) having a thickness of 0.25 mm was provided as an adhesive layer and a polyvinyl chloride layer (relative permittivity: 3.0) having a thickness of 1.25 mm was provided as a surface layer so that the total thickness of the protective-layer-equipped radio-wave scattering sheet 12 was 2.3 mm. The overall thickness of the protective layer was 1.5 mm, and the relative permittivity of the entire protective layer was 2.9. Because the improvement in the diffusion coefficient was +3.6%, Evaluation 3 was less than +10%. The results of Comparative Examples 3-11 and 3-12 show that, when the overall thickness of the protective layer is 1.5 mm, which is greater than 1.0 mm, even if the relative permittivity of the entire protective layer is in the range of 2.75 to 2.9, an improvement of 10% or more cannot be obtained relative to the diffusion coefficient of the reference radio-wave scattering sheet 1, and the improvement in the radio-wave scattering characteristics is reduced to less than 10%.

In Comparative Example 3-13, a glue layer (relative permittivity: 2.0) having a thickness of 0.5 mm was provided as an adhesive layer and a polyvinyl chloride layer (relative permittivity: 3.0) having a thickness of 1.5 mm was provided as a surface layer so that the total thickness of the protective-layer-equipped radio-wave scattering sheet 12 was 2.8 mm. The overall thickness of the protective layer was 2.0 mm, and the relative permittivity of the entire protective layer was 2.75. Because the improvement in the diffusion coefficient was -5.8%, Evaluation 3 was less than +10%. In Comparative Example 3-14, a starch paste layer (relative permittivity: 2.5) having a thickness of 0.5 mm was provided as an adhesive layer and a polyvinyl chloride layer (relative permittivity: 3.0) having a thickness of 1.5 mm was provided as a surface layer so that the total thickness of the protective-layer-equipped radio-wave scattering sheet 12 was 2.8 mm. The overall thickness of the protective layer was 2.0 mm, and the relative permittivity of the entire protective layer was 2.875. Because the improvement in the diffusion coefficient was -1.9%, Evaluation 3 was less than +10%. The results of Comparative Examples 3-13 and 3-14 show that, when the overall thickness of the protective layer is 2.0 mm, which is greater than 1.0 mm, even if the relative permittivity of the entire protective layer is in the range of 2.75 to 2.875, an improvement of 10% or more cannot be obtained relative to the diffusion coefficient of the reference radio-wave scattering sheet 1, and the improvement in the radio-wave scattering characteristics is reduced to less than 10%.

Based on the results of the third examples described above, for the protective-layer-equipped radio-wave scattering sheet 12 in which the protective layer includes two layers, i.e., the surface layer 2a and the adhesive layer 2b, if the overall thickness of the protective layer covering the radio-wave scattering surface 1d is in the range of 0.5 mm to 1.0 mm and the relative permittivity of the entire protective layer is in the range of 2.0 to 3.0, an improvement of 10% or more relative to the diffusion coefficient of the reference radio-wave scattering sheet 1 is obtained. Because the protective-layer-equipped radio-wave scattering sheet 11 provided with the dielectric layer 2' that satisfies the above conditions as a protective layer can realize a degree of directional diffusion higher than or equal to that of the radio-wave scattering sheet 1 used alone, the protective-layer-equipped radio-wave scattering sheet **11** can greatly contribute to improvement of communication quality not only in the 28 GHz band but also in microwaves and millimeter waves.

Although the embodiments of the protective-layer-equipped radio-wave scattering sheet according to the present invention have been described above with reference to the accompanying drawings, the present invention is not limited to these embodiments, and may be implemented by applying publicly known equivalent technical means without departing from the configuration described in the claims.

### Reference Signs List

- 11: protective-layer-equipped radio-wave scattering sheet (first embodiment)
- 1: radio-wave scattering sheet
- 1a: dielectric substrate
- 1b: back metal plate
- 1c: front metal processed layer
- 1d: radio-wave scattering surface
- 2: dielectric layer
- 3: adhesive layer
- 12: protective-layer-equipped radio-wave scattering sheet (second embodiment)
- 2': dielectric layer
- 2a: surface layer
- 2b: adhesive layer

## Claims

1. A protective-layer-equipped radio-wave scattering sheet comprising:
a metamaterial-structured radio-wave scattering sheet that, when an radio-wave scattering surface having a specific metal pattern formed on a dielectric substrate receives radio- waves in a specific frequency band, scatters the radio-waves in multiple directions; and
a protective layer that covers the radio-wave scattering surface of the radio-wave scattering sheet to protect the metal pattern, at least an outer surface of the protective layer being opaque, wherein
the protective layer has a thickness in a range of 0.25 mm to 3.0 mm at a portion covering the radio-wave scattering surface and has a relative permittivity in a range of 2.0 to 4.0.

2. The protective-layer-equipped radio-wave scattering sheet according to claim 1, wherein the protective layer is made of a single material having a thickness in a range of 0.25 mm to 2.0 mm at a portion covering the radio-wave scattering surface and having a relative permittivity in a range of 2.0 to 3.0.

3. The protective-layer-equipped radio-wave scattering sheet according to claim 1, wherein
the protective layer has a two-layer structure including a lower protective layer disposed on the radio-wave scattering surface and an upper protective layer disposed on the lower protective layer, and
a total thickness of the lower protective layer and the upper protective layer is in a range of 0.5 mm to 1.0 mm, and a relative permittivity of the entire protective layer including the lower protective layer and the upper protective layer is in a range of 2.0 to 3.0.
